# EUROPEAN PATENT APPLICATION

(11) **EP 3 674 029 A1**
(43) Date of publication of application: **01.07.2020**
(21) Application number: 18383005.8
(22) Date of filing: 28.12.2018
(51) Int. Cl.: B23K 26/06, B23K 26/08, B23K 26/34, B23K 26/21, B23K 26/082, B23K 26/352

(54) **METHOD AND SYSTEM FOR HEATING AN OBJECT USING AN ENERGY BEAM**

(71) Applicant: Etxe-Tar, S.A., 20870 Elgoibar (Guipúzcoa) (ES)
(72) Inventor: Gabilondo, Jose Juan, 20870 Elgoibar (Guipúzcoa) (ES)
(74) Representative: Balder IP Law, S.L.

(57) **Abstract**

A method of heating a portion of an object comprises the steps of:
projecting an energy beam (11) onto a surface of the object (100; 206) so as to produce a primary spot on the surface, and repetitively scanning the beam (11) in two dimensions in accordance with a scanning pattern so as to establish an effective spot (12) on the surface, and
displacing the effective spot (12) in relation to the surface of the object (100; 206) to progressively heat the at least one selected portion of the object, wherein displacing the effective spot (12) in relation to the surface of the object (100; 206) comprises displacing the effective spot following a track (104) featuring at least one change of direction.

The effective spot is maintained aligned with the track by modifying operation of a scanner (2) in correspondence with the at least one change of direction.

## Description

The present invention relates to the heating of an object using an energy beam, such as a light beam.

### STATE OF THE ART

It is known in the art to heat objects by directing an energy beam, such as a light beam (typically a laser beam), onto the object. This kind of heating is used in many different kinds of industrial processes, such as in laser hardening, laser softening of a previously hardened area, additive manufacturing, laser welding and laser cladding.

Traditionally, for such purposes, more or less fixed optics (lenses, mirrors...) have been used to establish a laser beam having a selected cross section, for example, featuring a substantially circular or rectangular cross section. Often, an aim is to shape and focus the laser beam so that it has a predetermined power or energy distribution along and across its cross section, at least where it impinges on the workpiece. Sometimes a relatively uniform energy distribution is preferred, sometimes more energy is applied to certain portions of the projected laser spot than to other portions. For example, in some implementations, a leading portion features a higher energy density than a trailing portion, etc.

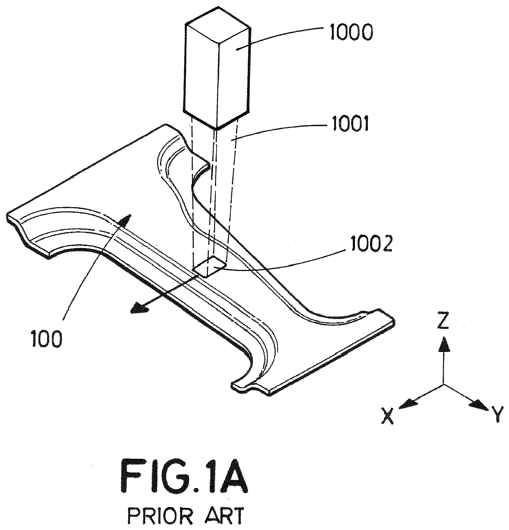

Figure 1A schematically illustrates a prior art system for heat treatment of a sheet metal object such as a pillar for a vehicle body. The system comprises a laser head 1000 that directs a laser beam 1001 (often generated by a laser source placed outside the laser head) onto the workpiece 100. The laser head 1000 includes means for correctly shaping and focusing the laser beam so as to project a laser spot 1002 with a desired shape and energy distribution on the workpiece. In the illustrated system, the laser spot is substantially rectangular. The laser head 1000 can typically be displaced in relation to the workpiece 100 according to the X, Y and Z axes illustrated in figure 1A, by displacing the laser head 1000, by displacing the workpiece 100, or both.

The workpiece 100 can, for example, be a workpiece with very high hardness, obtained by hot-pressing a sheet metal template to give it the desired shape, followed by cooling the workpiece to produce quenching, as known in the art. The laser beam 1001 is projected onto the workpiece in a region where it is desired to provide for reduced hardness, for example, to establish an area where deformation can easily take place in the case of an impact. Figure 1A schematically illustrates how this can be carried out by basically sweeping the laser beam 1001 over the area where reduced hardness is desired, typically corresponding to a strip or band across the pillar. Thus, reduced hardness can be obtained in correspondence with the path followed by the projected laser spot 1002. In figure 1A, the laser spot 1002 travels in the X direction, for example, due to relative movement between the laser head 1000 and the workpiece 100. It also frequent that the laser head includes means for scanning the laser beam in one or two directions, so that the displacement of the laser spot 1002 along the X axis can be produced by the scanner.

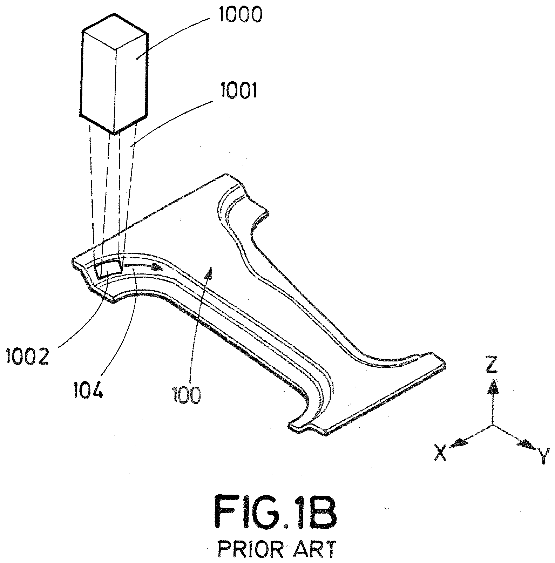

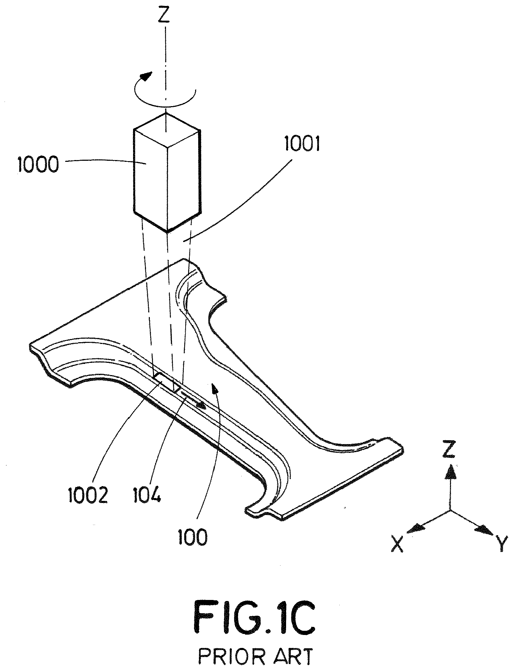

Figures 1B and 1C shows how with this kind of system the laser spot can follow a track 104 (schematically illustrated by the arrows in figures 1B and 1C) on the workpiece that includes a curve. In figures 1B and 1C, the curved track extends substantially in the X-Y plane. Now, as schematically illustrated in figures 1B and 1C, this may require that the projected laser spot 1002 be re-oriented in the X-Y plane, so as to remain properly aligned with the track -such as with the tangent to the track- while travelling along the track. As schematically illustrated in figure 1C, this is achieved by turning or pivoting the laser head 1000 around the Z axis of the system. Thus, in addition to means for displacing the laser spot according to the X and Y axes (and optionally along the Z axis), the laser head and/or the workpiece are provided with a further degree of freedom, namely, rotation according to the Z axis.

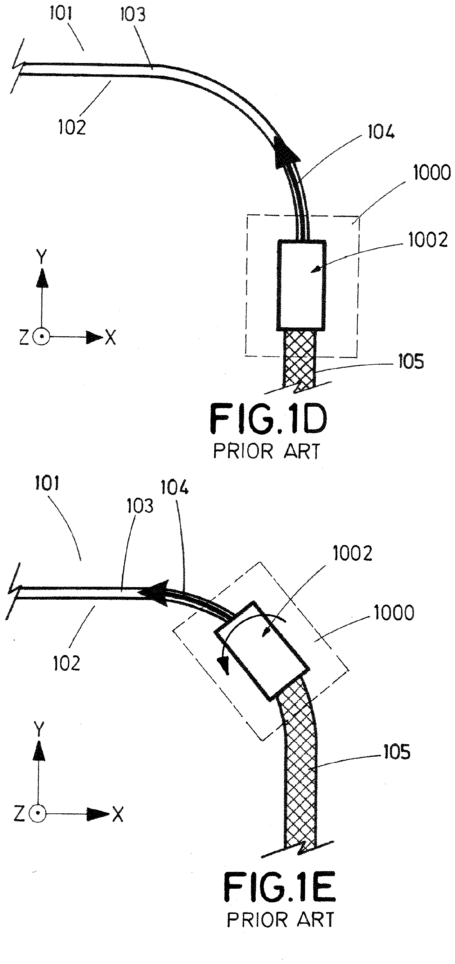

Figures 1D and 1E schematically illustrate a prior art system for laser welding of two metal parts 101 and 102 that are to be welded together. A laser beam is projected onto an interface area 103 where the two parts 101 and 102 mate, that is, where surfaces thereof face each other so that the two parts can be welded together. The laser beam produces a laser spot 1002 which is swept along a track 104, schematically illustrated by an arrow in figure 1D and 1E. By progressively displacing the laser spot 1002 along the track, the mating portions of the two parts are progressively melted. By solidification, a weld seam 105 is created.

As shown, the track extends in the X-Y plane, and includes straight and curved portions in that plane. A schematically illustrated laser head 1000 directs the laser beam onto the interface area. The laser beam is substantially aligned with the Z axis. As schematically illustrated, the laser beam generates a substantially rectangular laser spot 1002. The laser spot 1002 is moved along the track by relative movement between the laser head and the workpiece in the X and Y directions, and/or by using a one- or two-dimensional scanner to displace the laser beam so that the projected laser spot 1002 moves in the X-Y plane.

However, in order that the heating of the interface area at the curved section of the track resemble the heating at the straight portion, when a non-circular laser spot is used (or when a circular laser spot is used that has an irregular energy distribution such as more energy applied at a leading portion of the spot than to a trailing portion), it is often desirable to correctly align the laser spot with the track. Figures 1D and 1E schematically illustrate how this is conventionally achieved by pivoting or turning the laser head 1000 around the Z axis in correspondence with the curve of the track.

It is known in the art of laser heat treatment that instead of shaping the laser spot and determining the distribution of laser power by adapting the shape and power distribution with fixed optics, an alternative approach can be based on the use of an effective or virtual laser spot that is created by rapid and repetitive scanning of the laser beam in two dimensions. For example, WO-2014/037281-A2 explains how a laser beam can be used for, for example, the hardening of the surfaces of journals of a crankshaft, without producing overheating of the areas adjacent to the oil lubrication holes. Also other objects can be heat treated by methods and systems in line with the ones taught by WO-2014/037281-A2, the contents of which are incorporated herein by reference. WO-2014/037281-A1 discusses, inter alia, how a workpiece can be selectively heated by projecting a beam onto a surface of the workpiece so as to produce a primary spot on the surface, the beam being repetitively scanned in two dimensions in accordance with a scanning pattern so as to establish an effective spot on the surface of the workpiece, this effective spot having a two-dimensional energy distribution. This effective spot is displaced in relation to the surface of the workpiece to progressively heat a selected portion of the workpiece. In some embodiments, the two-dimensional energy distribution of the effective spot is dynamically adapted during displacement of the effective spot in relation to the surface of the workpiece.

WO-2015/135715-A1, the contents of which are incorporated herein by reference, discusses *inter alia* how, in the context of this kind of technique for laser hardening, different scanning patterns can be used. Illustrated embodiments include scanning patterns with segments that are perpendicular to each other. One illustrated embodiment features a scanning pattern substantially shaped as a "digital 8".

It has been found that the technique for heating using an energy beam as suggested in WO-2014/037281-A1 and WO-2015/135715-A1 can be used for other applications than for hardening of workpieces. For example, WO-2016/026706-A1, the contents of which are incorporated herein by reference, teaches how the technique can be used for additive manufacturing. WO-2016/146646-A1, the contents of which are incorporated herein by reference, teaches how the technique can be used for heat treatment of sheet metal. Further applications include welding of objects, for example, for joining two or more components of an object, as described in WO-2018/054850-A1, the contents of which are incorporated herein by reference.

### DESCRIPTION OF THE INVENTION

A first aspect of the invention relates to a method of heating at least one selected portion of an object (such as a workpiece, elements to be joined, matter to be solidified in the context of additive manufacturing, etc.), comprising the steps of:
projecting, with a device, such as a laser head, comprising a scanner, an energy beam onto a surface of the object so as to produce a primary spot on the surface, and repetitively scanning the beam in two dimensions in accordance with a scanning pattern so as to establish an effective spot on the surface, the effective spot having a two-dimensional energy distribution,
displacing the effective spot in relation to the surface of the object to progressively heat the at least one selected portion of the object, wherein displacing the effective spot in relation to the surface of the object comprises displacing the effective spot following a track featuring at least one change of direction, that is, at least one curve or bend.

The method comprises maintaining the effective spot aligned with the track by modifying operation of the scanner in correspondence with the at least one change of direction, that is, at or during said curve or bend. The term "in correspondence with" denotes that the change of direction takes place approximately at said curve or bend, such as shortly before, at or shortly after said curve or bend, or, especially in the case of a curve, optionally substantially continuously throughout the curve.

As explained above and as exemplified when discussing figures 1B-1E, alignment of the spot used for heating an object with the track that the spot follows on the object (for example, alignment with the tangent to a curve, such as a curve in a plane against which the energy beam is directed) has traditionally been achieved by rotating, pivoting or turning the device that projects the energy beam, such as by rotating, pivoting or turning a laser head, typically according to an axis substantially perpendicular to the plane containing the track or the relevant portion, bend or curve thereof. For example, in the case of a track featuring a curve or a bend in the X-Y plane, the laser head can be turned around the Z axis of the system. This requires the system to be provided with physical means allowing for turning, rotation or pivotation of the device (such as a laser head), and corresponding drive means and means for controlling the drive means. Additionally, the movement around the Z axis inevitably implies mechanical wear of components. The present invention makes it possible to overcome one or more of these disadvantages by producing the alignment between the (effective spot) and the track by modifying the manner in which the scanner is operated, so as to, for example, rotate or pivot the effective spot around an axis substantially perpendicular to the plane containing the track or to a plane substantially containing the relevant part of the track. For example, in the case of a portion of a track in the X-Y plane, the effective spot can be turned around the Z axis, thereby re-orienting the effective spot in the X-Y plane. Thus, the alignment or adaptation can be achieved without any need to rotate, pivot or turn the device (such as the laser head), for example, around the Z axis. Basically, the mechanical degree of freedom used in the art (such as schematically illustrated in figures 1B-1D) can be replaced by what can be regarded as an electronic degree of freedom, implemented by adaptation of the instructions or signals that are used to operate the scanner, such as the instructions or signals that control the movement of the reflecting devices such as the mirrors of the scanner, such as a galvanometric scanner. This can serve to simplify the system and to reduce the costs of the system, and also to increase reliability due to a reduction in the number of mechanical elements and control components that can be subjected to mechanical wear and suffer failure. For example, in some embodiments, for displacing the effective spot along a curve in the track the scanner may be operated to displace the scanning pattern angularly in relation to a center point of the curve, for example, by basing the control of the scanning mirrors on a corresponding angular movement of control points that determine the scanning pattern, in relation to the center point of the curve. This can imply a change in the shape of the scanning pattern at the curve, as the radially more outer control points will move at a higher linear velocity than the radially inner control points, if moving at the same angular velocity.

In some embodiments of the invention the step of maintaining the effective spot aligned with the track is carried out without pivoting the device around any axis for the purpose of aligning the effective spot with the track.

In some embodiments of the invention, the step of modifying operation of the scanner is carried out so as to turn the effective spot around an axis substantially aligned with the energy beam, without turning the device and without turning the object around any axis substantially aligned with the energy beam. That is, the effective spot can be turned and re-oriented in accordance with the track by modifying operation of the scanner, rather than by turning the device, such as the laser head, around the corresponding axis. In this document the term "substantially aligned with" preferably allows for deviations of not more than 45 degrees, preferably less than 40 degrees, such as less than 30, 25, 20, 15, 10 or 5 degrees. This takes into account the fact that the energy beam is often not directed completely perpendicularly onto the object, for several reasons: a certain deviation is due to the repetitive two-dimensional scanning, and a further deviation may be due to the fact that the scanner is additionally used for displacing the effective spot along the track. Additional reasons for the deviation is the fact that workpieces often have surfaces with a three-dimensional shape. On the other hand, it is often preferred to project the energy beam onto the object in a non-orthogonal matter, to avoid reflection of the energy beam onto the mirrors of the scanner.

In some embodiments of the invention, the track extends in a plane, and the step of modifying operation of the scanner is carried out so as to turn the effective spot around an axis substantially perpendicular to the plane, without turning the device and without turning the object around any axis substantially perpendicular to the plane.

In some embodiments of the invention, the method comprises maintaining the geometric shape of the effective spot and/or of the scanning pattern constant in correspondence with said at least one change of direction.

In some embodiments of the invention, the method comprises modifying a geometric shape of the effective spot and/or of the scanning pattern in correspondence with said at least one change of direction.

A further aspect of the invention relates to a method of heating at least one selected portion of an object, such as a workpiece, elements to be joined, matter to be solidified in the context of additive manufacturing, etc., comprising the steps of:
projecting, with a device,such as a laser head, comprising a scanner, an energy beam onto a surface of the object so as to produce a primary spot on the surface, and repetitively scanning the beam in two dimensions in accordance with a scanning pattern so as to establish an effective spot on the surface, the effective spot having a two-dimensional energy distribution,
displacing the effective spot in relation to the surface of the object to progressively heat the at least one selected portion of the object, wherein displacing the effective spot in relation to the surface of the object comprises displacing the effective spot following a track featuring at least one change of direction, that is, at least one curve or bend.

The method comprises modifying a geometric shape of the effective spot and/or of the scanning pattern in correspondence with said at least one change of direction.

The reference to an adaptation or modification of a geometric shape of the effective spot and/or of the scanning pattern refers to the fact that the actual shape of the spot and/or scanning pattern, and not (only) its (or their) orientation in relation to the object, is changed. For example, a substantially square or rectangular effective spot (and/or scanning pattern) can be re-shaped into a substantially trapezoidal effective spot (and/or scanning pattern), or into a polygonal effective spot (and/or scanning pattern) featuring six or more sides, etc. In many embodiments, radially inner sides are longer than corresponding radially outer sides of the polygon.

Changing the shape of the effective spot and/or the scanning pattern can be helpful in order to, for example, keep the effective spot (and/or the scanning pattern) within the bounderies of the track to be followed (for example, within the bounderies of a track having a constant width throughout at least one section comprising both a straight and a curved portion), and also to provide for an adequate energy distribution, taking into account that the radially outer portions of the effective spot (and/or scanning pattern) may move at a higher linear velocity than the radially inner portions of the effective spot (and/or scanning pattern) when the effective spot (and the scanning pattern) passes along a curved or bent portion of the track. Thus, for example, the radially outer portions of the effective spot (and/or the scanning pattern) may preferably be subjected to a change in their size in the direction parallel with (tangential to) the track that is different from the increase in the corresponding size of the corresponding radially inner portions. For example, a substantially square or rectangular effective spot can be reshaped into a substantially trapezoidal effective spot or into an effective spot shaped as a polygon with 6,8, 10 or more sides, just to mention some examples) featuring at least one radially outer side that is larger than a corresponding radially inner side, etc. For example, the radially outer side or sides can feature a larger length at the curved portion of the track than at the preceding straight portion of the track, whereas the radially inner side or sides may feature a smaller length at the curved portion than at the preceding straight portion, or at least a smaller length than the radially outer side or sides. For example, a substantially circular effective spot may lose its circular shape and feature a radially outer half larger than the radially inner half, etc.

In some embodiments of the invention, modifying the geometric shape of the effective spot and/or of the scanning pattern comprises one or more of the following options A-C:
A) Modifying the scanning pattern, wherein at least some portions of the scanning pattern are modified as a function of their distance to a center of the change of direction or curve. For example, the scanning pattern can be adapted so that the radially inner portions are subjected to a relative reduction in their extension along the track compared to the radially outer portions. For example, a scanning pattern having a basically rectangular shape (circumference) can end up featuring a substantially trapezoidal shape (circumference), a circular scanning pattern may end up being non-circular with a major part of the circumference corresponding to its radially outer half, etc. In some embodiments the shape of the scanning pattern can be continuously or repetitively varied as the scanning patterns proceeds along the portion of the track that represents the change of direction, for example, along a curve. In some embodiments of the invention, the change or changes of the shape of the scanning pattern can be achieved by modifying the relative positions of characteristic points of the scanning pattern (such as control points that determine the layout of the scanning pattern, for example, by defining the start and/or the end of segments and/or the control of the scanner mirrors). This change can in some embodiments take place continuously throughout the curve. The change can take place as a function of the radial distance of the characteristic points (such as control points) to the center of the curve and/or as a function of the position of the scanning pattern along the curve, in the direction of the track.
B) Modifying the scanning pattern so that all parts of the scanning pattern are displaced at substantially the same angular velocity along a curved portion of the track in correspondence with the at least one change of direction.
C) Displacing characteristic points of the scanning pattern at the same linear velocity along a straight portion of the track, and displacing the characteristic points of the scanning pattern at the same angular velocity throughout a curved portion of the track in correspondence with said change of direction, at least one of the characteristic points being displaced at a different linear velocity than at least another one of the characteristic points at said curved portion of the track.

For example, the characteristic points can be displaced along the curve keeping their radial distance to the center of the curve constant, and moving all of the characteristic points at the same angular velocity. For example, in the case of four characteristic points (such as control points) determining the four corners of a rectangular scanning pattern, operating in this way may give rise to a trapezoidal scanning pattern throughout the curve, as at the same angular velocity the characteristic points furthest away from the center of the curve will move at a higher linear velocity in the direction along the track, than the characteristic points closer to the center of the curve, that is, the radially inner characteristic points. This use of control points that determine the scanning pattern can serve to simplify the implementation of the change of shape of scanning pattern and effective spot throughout curved portions of the track. For example, operation of the scanner can be based on signals to the scanner (for controlling the beam deflecting components of the scanner) that are based on the movement of the control points with a determined velocity, a linear velocity along the straight portion of the track that may be the same linear velocity for all control points, and an angular velocity of the control points at the curve, that may be the same for all control points, whereby the shape of the scanning pattern will be automatically modified as when moving at the same angular velocity dα/dt, the radially outer control points will move faster (in terms of linear velocity) than the radially inner control points.

In some embodiments of the invention, the scanning pattern is substantially symmetric with respect to a centerline parallel with the track when the scanning pattern is at a straight portion of the track, and wherein the scanning pattern is not symmetric with respect to any centerline in correspondence with the change of direction. Frequently, a symmetric scanning pattern is used at a straight portion of the track, so as to achieve an even heat treatment along the track on both sides of the centerline of the scanning pattern, the centerline being defined as the line that is in the middle of the symmetric scanning pattern (according to a direction perpendicular to the track) and aligned with the track. For the reasons explained above, it can be preferred that the scanning pattern ceases to be symmetric with respect to any centerline in correspondence with a curve in the track, for example, for the purpose of keeping the effective spot within the width of the track at the curve, and/or to adapt the two-dimensional energy distribution of the effective spot so that more energy is applied at the radially outer portion than at the radially inner portion, to compensate for the differences in the linear velocity between the radially outer and the radially inner portions of the effective spot at the curve. In many embodiments, at the curve the effective spot will feature bends or curved portions that basically align it with the curvature of the track.

The displacement of the effective spot in relation to the surface of the object is carried out in accordance with a suitable track. That is, the real/primary spot, that is, the spot that is produced by the beam at any given moment due to its projection onto the object, is scanned in accordance with the scanning pattern to create the effective spot, and this effective spot is displaced in accordance with the track. Thus, two types of movement are combined or overlaid: the movement of the primary spot in accordance with the scanning pattern, and the movement of the effective spot in accordance with the track. The track can feature a more or less complex shape and includes one or more curves or bends where the direction of the track changes.

The term "two-dimensional energy distribution" refers to the manner in which the energy applied by the energy beam is distributed over the effective spot, for example, during one sweep of the beam along the scanning pattern. When the effective spot is projected onto a non-planar portion or area, such as a curved portion or area such as a portion or area featuring bends, the term "two-dimensional energy distribution" refers to how the energy is distributed along and across the surface of the object, that is, to the energy distribution along and across the effective spot as projected onto the surface of the object.

The method allows for a relatively rapid heating of a substantial area of the surface of the object, due to the fact that the effective spot can have a substantial size, such as, for example, more than 4, 10, 15, 20 or 25 times the size (area) of the primary spot. Thus, heating a certain region or area of the object to a desired extent in terms of temperature and duration can be accomplished more rapidly than if the heating is carried out by simply displacing the primary spot over the entire area, for example, following a sinusoidal or meandering pattern, or a straight line. The use of an effective spot having a relatively large area allows for high productivity while still allowing the relevant portion or portions of the surface to be heated for a relatively substantial amount of time, thereby allowing for, for example, less aggressive heating without compromising productivity.

The primary spot can have an area substantially smaller than the one of the effective spot. For example, in some embodiments of the invention, the primary spot has a size of less than 4 mm², such as less than 3 mm², at least during part of the process. The size of the primary spot can be modified during the process, so as to optimize the way in which each specific portion of the object is being heat treated, in terms of quality and productivity.

Preferably, the primary spot is displaced on the surface of the object in accordance with the scanning pattern with a first average velocity, and the effective spot is displaced along the track with a second average velocity, the first average velocity being substantially higher than the second average velocity, such as at least 5, 10, 50 or 100 times the second average velocity. The term "first average velocity" refers to the length of the scanning pattern projected onto the surface of the object divided by the time needed for the primary spot to complete one sweep along the scanning pattern, whereas the term "second average velocity" refers to the length of the track followed by the effective spot on the surface divided by the time needed for the effective spot to complete the track. A high velocity of the primary spot along the scanning pattern reduces the temperature fluctuations within the effective spot during each sweep of the primary spot along the scanning pattern.

Preferably, the beam is scanned in accordance with the scanning pattern so that the scanning pattern is repeated by the beam with a frequency of more than 10, 25, 50, 75, 100, 150, 200 or 300 Hz (*i.e*., repetitions of the scanning pattern per second). A high repetition rate can be appropriate to reduce or prevent non-desired temperature fluctuations in the areas being heated by the effective spot, between each scanning cycle, that is, between each sweep of the beam along the scanning pattern. In some embodiments of the invention, the scanning pattern remains constant, and in other embodiments of the invention, the scanning pattern is modified between some or all of the sweeps of the beam along the scanning pattern.

On the other hand, the use of an effective spot created by scanning the primary spot repetitively in two dimensions in accordance with a scanning pattern makes it possible to establish an effective spot having a selected two-dimensional energy distribution, which is substantially independent of the specific optics (lenses, mirrors, etc.) being used, and which can be tailored and adapted to provide for an enhanced or optimized heating, from different points of view, including the speed with which the heat treatment is completed (for example, in terms of cm² per minute or in terms of terminated units per hour) and quality. For example, the heat can be distributed so that a leading portion of the effective spot has a higher energy density than a trailing portion, thereby reducing the time needed to reach a desired temperature of the surface, whereas the trailing portion can serve to maintain the heating for a sufficient amount of time to reach a desired depth and/or quality, thereby optimizing the velocity with which the effective spot can be displaced in relation to the surface of the object, without renouncing on the quality of the heat treatment. Also, the two-dimensional energy distribution can be adapted in relation to the sides of the effective spot, depending on the characteristics of the object, for example, so as to apply less heat in areas adjacent to an edge of the object or an opening in the object, where cooling due to heat transfer is slower, or so as to apply less heat in areas already featuring a relatively high temperature, for example, due to heating that has taken place recently. Also, the effective spot can be adapted in accordance to the tri-dimensional shape of the object, for example, to adapt the heating to the curvature, width, etc., of the object in the area being heated, and to the configuration of the portion of the object that is to be heated. The shape of the effective spot and/or the two-dimensional energy distribution can be dynamically adapted whenever needed, thereby adapting the process to the specific part of the object that is to be heated at any given moment. In some embodiments of the invention, the two-dimensional energy distribution can be varied as a function of the respective irradiation site on the object, taking into account, for example, the heat removal capability of a surrounding region. In some embodiments of the invention, the two-dimensional energy distribution can be dynamically varied taking into account desired characteristics of the object in different regions of the product, such as different requirements on hardness, rigidity, softness, ductility, etc.

Of course, the present invention does not exclude the possibility of carrying out part of the heating operating with the primary spot in a conventional way. For example, the primary spot can be displaced to carry out the heating in correspondence with the outline or contour of a region to be heated, or to carry out heating of certain details of the object being heated, whereas the effective spot described above can be used to carry out the heating of other parts or regions of the object, such as the interior or main portion of a region to be heated. The skilled person will chose the extent to which the effective spot rather than the primary spot will be used to carry out the heating, depending on issues such as productivity and the need to carefully tailor the outline of a region to be heated or a certain portion of an object being subjected to heating. For example, it is possible to use the primary spot to outline a region to be heated, while the effective spot is used to heat the surface within the outlined region. In some embodiments of the invention, during the process, the scanning pattern can be modified to reduce the size of the effective spot until it ends up corresponding to the primary spot, and vice-versa.

That is, it is not necessary to use the effective spot to carry out all of the heating that has to take place during the process. However, at least part of the process is carried out using the effective spot described above. For example, it can be preferred that during at least 50%, 70%, 80% or 90% of the time during which the beam is applied to the object, it is applied so as to establish the effective spot as explained above, that is, by repetitively scanning the primary spot in accordance with the scanning pattern, this scanning being overlaid on the movement of the effective spot in relation to the object, that is, along the track.

The heating can be for the purpose of any kind of heat treatment, such as surface hardening, welding, solidification, etc. The object can be any suitable kind of object in any suitable form, including powder form or similar, which may often be the case in the context of additive manufacturing. For example, the object can be a sheet metal object, or any other kind of object. The object can be of metal or of any other material. The object does not have to be one single workpiece but can comprise several parts, for example, two or more parts to be welded together by the heating carried out fully or partly by the beam. Thus, the term "object" should not be interpreted in a narrow sense. The surface of the object can include openings or voids. This can, for example, occur when the surface comprises portions relating to different objects, where a space may exist between the objects. This is, for example, frequently the case when two parts are to be welded together, where one of the parts may be spaced from the other part in correspondence with at least part of the interface where a weld seam is to be established. In some embodiments, the surface is flat, whereas in other embodiments it features a three-dimensional shape.

In some embodiments of the invention, the method is a method for additive manufacturing, for joining at least two workpieces by welding them together, for laser cladding or for laser hardening.

In some embodiments of the invention, the effective spot is displaced along the track by relative movement of the device in relation to the object (such as by displacement of the object and/or the device according to one or two axes of the system, for example, by movement each of the device or object according to one, two or three orthogonal axes, or by movement of the device according to one axis and by movement of the object according to a perpendicular axis, such as axes substantially in the plane of the track to be followed by the beam), and/or the scanner is additionally operated to displace the effective spot along the track. In some embodiments, this is combined with a relative movement between the device, such as a laser head, and the object.

In some embodiments of the invention, the two-dimensional energy distribution of the effective spot is dynamically adapted during displacement of the effective spot in relation to the at least one change of direction of the track, such as a curve or bend in the track, so that it is different in a radially outer portion of the effective spot than in a radially inner portion of the effective spot. That is, in addition to the alignment with the bend or curve, the scanner can further be operated to additionally dynamically modify the two-dimensional energy distribution of the effective spot, for example, to apply more energy in correspondence with a radially outer portion of the effective spot than in correspondence with a radially inner portion thereof at the curve, so as to compensate for the higher speed of the radially outer portion of the effective spot compared to the radially inner portion thereof at the curve.

Additionally, in some embodiments, the two-dimensional energy distribution of the effective spot is dynamically adapted during displacement of the effective spot in relation to the surface of the object, to accommodate for varying characteristics of the object along the track. Thereby, adaptation of the effective spot to the area or region of the object currently being heated can be accomplished. The expression dynamic adaptation is intended to denote the fact that adaptation can take place dynamically during displacement of the effective spot. Different means can be used to achieve this kind of dynamic adaptation, some of which are mentioned below. For example, in some embodiments of the invention, the scanning system can be operated to achieve the dynamic adaptation (for example, by adapting the operation of galvanic mirrors or other scanning means, so as to modify the scanning pattern and/or the velocity of the primary spot along the scanning pattern or along one or more segments or portions thereof), and/or the beam power and/or the size of the primary spot can be adapted. Open-loop or closed-loop control can be used for controlling the dynamic adaptation. The dynamic adaptation can affect the way in which the energy is distributed within a given area of the effective spot, and/or the actual shape of the effective laser spot, and thus the shape of the area being heated at any given moment (disregarding the fact that the primary spot is moving, and just considering the effective spot). For example, the length and/or the width of the effective spot can be adapted dynamically during the process. Thus, by this dynamic adaptation, the two-dimensional energy distribution can be different in relation to different portions of the surface of the object.

That is, the two-dimensional energy distribution can be adapted by adapting, for example, the power of the beam -for example, by switching between different power states such as between on and off-, and/or by adapting the scanning pattern -for example, adding or leaving out segments, or modifying the orientation of segments, or completely changing a pattern for another one-, and/or by adapting the velocity with which the beam moves along the scanning pattern, such as along one or more segments thereof. The choice between different means for adapting the two-dimensional energy distribution can be made based on circumstances such as the capacity of the equipment to rapidly change between power states of the beam, and on the capacity of the scanner to modify the pattern to be followed and/or the speed with which the primary spot moves along the scanning pattern.

In some embodiments of the invention, the beam is displaced along said first scanning pattern without switching the beam on and off and/or while maintaining the power of the beam substantially constant. This makes it possible to carry out the scanning at a high speed without taking into account the capacity of the equipment, such as a laser equipment, to switch between different power levels, such as between on and off, and it makes it possible to use equipment that may not allow for very rapid switching between power levels. Also, it provides for efficient use of the available output power, that is, of the capacity of the equipment in terms of power. Thus, adaptation of scanning speed and/or scanning pattern can often be preferred over adaptation of beam power. Other means for dynamically adapting the two-dimensional energy distribution include adaptation of the focus of the beam so as to vary or maintain the size of the primary laser spot while it is being displaced along the scanning pattern, and/or while the effective spot is being displaced in relation to the surface of the object.

The method can be carried out under the control of electronic control means, such as a computer.

In some embodiments of the invention, the energy beam is a laser beam and the device is a laser head for projecting the laser beam onto the object. A laser beam is often preferred due to issues such as cost, reliability, and availability of appropriate scanning systems. In some embodiments of the invention, the power of the laser beam is higher than 1 kW, such as higher than 3 kW, higher than 4 kW, higher than 5 kW or higher than 6 kW, at least during part of the process.

A further aspect relates to a system for heating at least one selected portion of an object, the system comprising:
means for supporting an object, and
a device for projecting an energy beam onto a surface of the object;
wherein the device comprises a scanner for scanning the energy beam in at least two dimensions; and
wherein the system is programmed for carrying out the method of any of the preceding claims.

In some embodiments of the invention, the system includes means for producing a relative movement between the device including the scanner and the object, by displacing the device and/or the object in relation to each other.

In some embodiments of the invention, the system comprises means for relative movement between the object and the device by displacing the device according to at least two orthogonal axes (X, Y), wherein the system does not allow for pivotation of the device with regard to any axis substantially parallel to the energy beam. In some embodiments of the invention, the device is not capable of pivotation with regard to any axis. As the system can adapt the two-dimensional energy distribution of the effective spot by being programmed to carry out the method of the invention as explained above, there may be no need to incorporate additional degrees of freedom, in addition to the movement of the device along two or more orthogonal axes. This serves to simplify the mechanical structure of the system, thereby contributing to reduce the costs of the system and to enhance durability and reliability.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1A-1C are schematic perspective views of a prior art system for heat treatment of sheet metal.
Figures 1D and 1E are schematic top views of a prior art system for laser welding.
Figures 2A and 2B schematically illustrate a method in accordance with an embodiment of the invention, for heat treatment of a vehicle component.
Figures 3A and 3B schematically illustrate a method in accordance with an embodiment of the invention, for laser welding.
Figure 4 illustrates an embodiment of the invention including means for displacing a laser head in relation to an object subjected to heat treatment.
Figure 5 is a schematic perspective view of a system for powder bed fusion in accordance with an embodiment of the invention.
Figures 6 and 7 schematically illustrate how the shape of the scanning pattern is adapted in correspondence with a curve in a track followed by the effective spot, in accordance with two embodiments of the invention.
Figure 8 schematically illustrates how control points of a scanning pattern advance along a curved portion of a track, in accordance with one possible embodiment of the invention.
Figure 9 schematically illustrates how control points of a scanning pattern advance along a curved portion of a track, in accordance with another possible embodiment of the invention.

### DESCRIPTION OF WAYS OF CARRYING OUT THE INVENTION

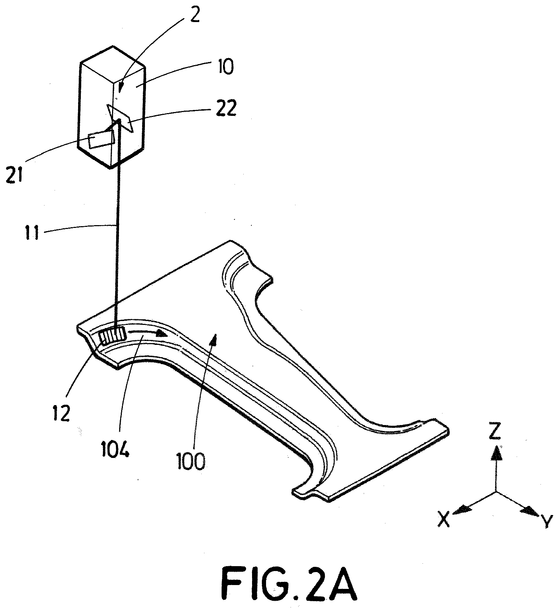

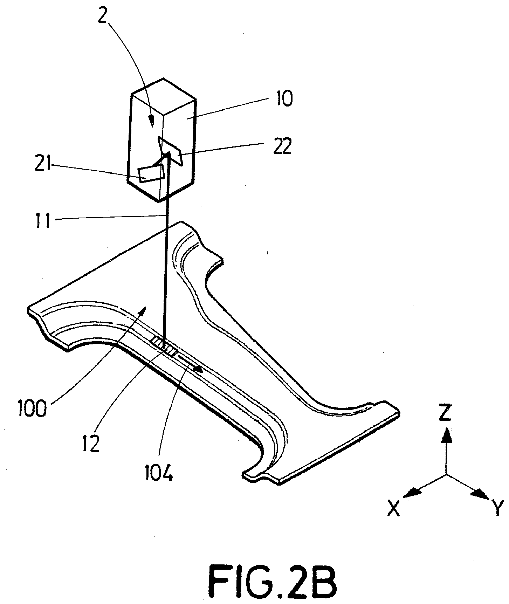

Figure 2A illustrates a system in accordance with one possible embodiment of the invention, in this case for heat treatment of a sheet metal object such as a pillar for a vehicle. The system comprises a laser head 10 for directing a laser beam 11 onto a workpiece 100, such as a workpiece for a vehicle body component, such as a vehicle pillar that is to be subjected to heat treatment. The laser beam can be originated by a laser source remote from the laser head 10 or within the laser head 10. Just as in the case of figures 1B and 1C, figures 2A and 2B illustrate how the laser spot is to be displaced along a track 104 including a curve, such as a curve in the X-Y plane.

However, in the system of the embodiment of the invention, the spot that is displaced along the track is an effective spot (also known as an equivalent or virtual spot) 12 created by repetitive scanning of the laser beam in two dimensions, according to a scanning pattern. For this purpose, the laser head includes a scanner 2, such as a galvanometric scanner with two scanning mirrors 21 and 22, as schematically illustrated in figures 2A and 2B. The scanning pattern followed by the primary spot projected by the laser beam 11 on the surface of the workpiece 100 at each specific moment is schematically illustrated as a set of parallel lines in figures 2A and 2B. However, any other suitable scanning pattern can be used, including scanning patterns as known from WO-2015/135715-A1 referred to above, scanning patterns with curved segments, etc.

Thus, as known from for example WO-2016/146646-A1, the two-dimensional energy distribution within the effective spot 12 can be tailored by the choice of scanning pattern, velocity of the primary spot along the scanning pattern, beam power at each specific portion of the scanning pattern, etc. This allows for dynamic adaptation of the two-dimensional energy distribution so as to optimize the heat treatment. Additionally, and differently from what is suggested in figures 1B and 1C, the re-orientation of the effective spot 12 so as to align it with the track 104 while following the curved portion and transiting from the curved portion to the straight portion of the track can be implemented without turning the laser head around the Z axis: instead, the re-orientation is achieved by adapting the operation of the scanner 2, thereby maintaining the scanning pattern and the effective spot 12 produced thereby correctly aligned with the track. This is schematically illustrated in figures 2A and 2B by the way in which the lines of the schematically illustrated scanning pattern have been reoriented between figures 2A and 2B. Basically, the projection of the scanning pattern on the X-Y plane has turned approximately 45 degrees around the Z axis, whereas the laser head has not turned. Thus, compared to the operation in accordance with figures 1B and 1C, a mechanical degree of freedom (rotation or turning of the physical laser head 1000 around the Z axis) has been replaced by what can be regarded as an electronic degree of freedom, namely, by a change in the instructions that control the scanner mirrors 21 and 22.

Movement of the effective spot 12 according the X and Y axes can be performed using the scanner mirrors and/or by relative displacement between laser head 10 and workpiece 100.

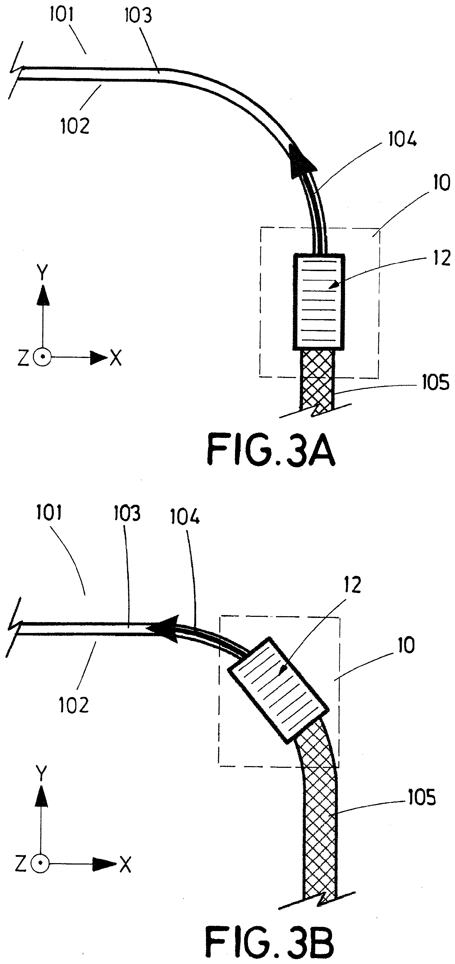

Figures 3A and 3B schematically illustrate these principles applied to laser welding. The layout is similar to the one shown in figures 1D and 1E, but in the embodiment of figures 3A and 3B the system creates an effective spot 12 by repetitive scanning of the laser beam in two dimensions, for example, using a galvanometric scanner with two mirrors (not shown in figures 3A and 3B). In figures 3A and 3B the scanning pattern is illustrated as a set of parallel lines, but any other suitable scanning pattern can be used. As explained, the use of this kind of effective spot allows for flexible adaptation of the two-dimensional energy distribution, for example, taking into account how the welding is progressing, how the weld seam is being formed, irregularities in the workpieces 101, 102 or in the spacing between them, etc. Additionally, and as schematically illustrated in figures 3A and 3B, the system is configured for aligning the effective laser spot with the track 104 in the X-Y plane by modifying the operation of the scanner in correspondence with the curve in the X-Y plane. This is schematically illustrated by the way in which the parallel lines are oriented in figure 3B if compared to figure 3A. Thus, alignment of the effective spot 12 with the track 104 in correspondence with the curve is achieved by the way in which the scanner is operated (as schematically illustrated in figures 3A and 3B), instead of by turning or pivoting the laser head around the Z axis (as schematically illustrated in figures 1D and 1E). Thus, also here a degree of freedom based on mechanics (that is, based on physically turning the laser head 1000 around the Z axis as shown in figures 1D and 1E) has been replaced by what can be regarded as an electronic degree of freedom, based on the way in which the scanner is operated, that is, based on the instructions sent to the scanner.

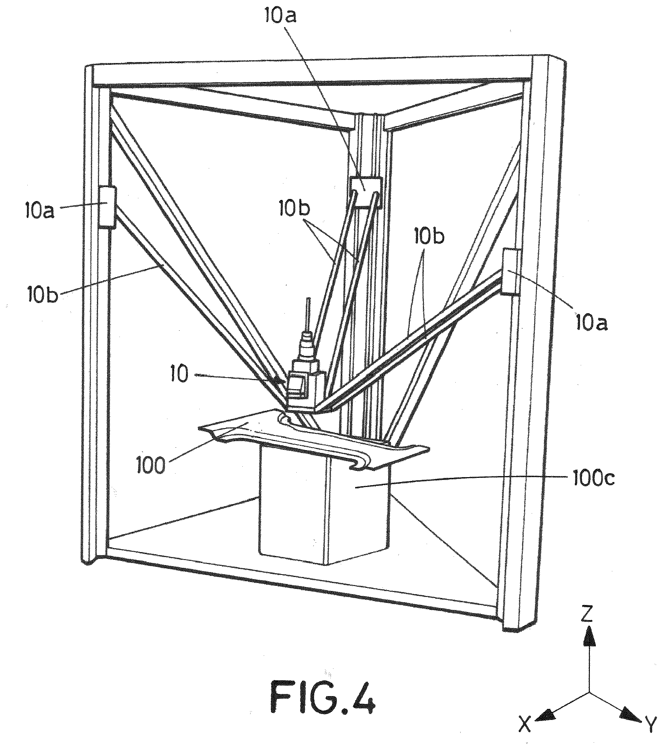

Figure 4 schematically illustrates a system in accordance with an embodiment of the invention in which the laser head 10 (including a scanner, not shown) can be displaced in the X, Y and Z directions in relation to a workpiece 100. The laser head 10 is connected to actuators 10a through linkages 10b. The workpiece 100 is supported by schematically illustrated support means 10c. In this embodiment of the invention, the displacement is based on the parallel manipulator concept. However, any other suitable means of displacement of the laser head 10 can be used, such as a robot arm, etc. In some embodiments of the invention, it is the workpiece 100 that is displaced in relation to the laser head 10. Also, a combination of these two approaches can be used. Additionally or alternatively, displacement of the effective spot over a track on the workpiece can be carried out using the scanner (not shown) to progressively displace the effective spot created by the two-dimensional scanning discussed above, along its track. Now, differently from systems mechanically adapted to align a laser spot with a curved track as shown in figures 1B-1E, the system of figure 4 does not have (or does not require) rotation of the laser head 10 according to the Z axis for adapting the orientation of the effective spot in the X-Y plane.

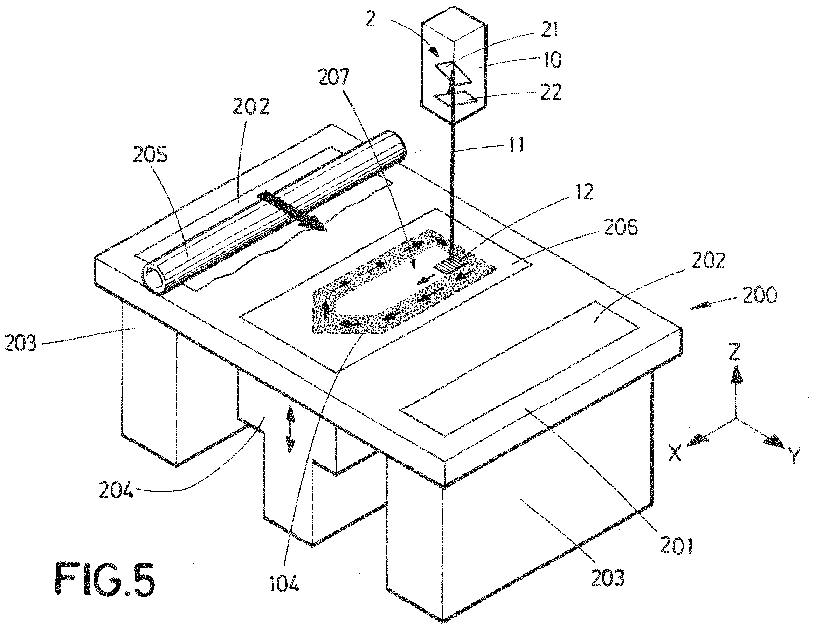

Figure 5 shows how the invention can be applied in the context of additive manufacturing, for example, in the context of an SLS system for producing an object out of a building material that is supplied in powder form, such as metal powder. The system 200 comprises a laser equipment including a laser head 10 for producing a laser beam 11 as described above, including the scanner 2 including two mirrors 21, 22 or similar for two-dimensional scanning of a laser beam 11 in two dimensions X, Y. The system further comprises an arrangement for distribution of the building material, comprising a table-like arrangement with a top surface 201 with two openings 202 through which the building material is fed from two feed cartridges 203. In the center of the top surface 201 there is an additional opening, arranged in correspondence with a platform 204 which is displaceable in the vertical direction, that is, in parallel with a Z axis of the system. Powder is supplied from the cartridges 203 and deposited on top of the platform 204. A counter-rotating powder leveling roller 205 is used to distribute the powder in a layer 206 having a homogeneous thickness.

The laser beam is projected onto the layer 206 of the building material on top of the platform 204 to fuse the building material in a selected region or area 207, which corresponds to a cross section of the object that is being produced. Once the building material in this area 207 has been fused, the platform is lowered a distance corresponding to the thickness of each layer of building material, a new layer of building material is applied using the roller 205, and the process is repeated, this time in accordance with the cross section of the object to be produced in correspondence with the new layer.

In accordance with the present embodiment of the invention, the laser beam 11 (and the primary laser spot that the beam projects on the building material) is repetitively scanned at a relatively high speed following a scanning pattern (schematically illustrated as a set of parallel lines in the effective spot 12 of figure 5), thereby creating an effective laser spot 12, illustrated as a square in figure 5. This is achieved using the scanner 2. This effective spot 12 is displaced according to a defined track 104, schematically illustrated by the arrows within the region 207. The track includes bends and sections that extend at different angles to each other in the X-Y plane. In accordance with the invention, the effective spot 12 can be aligned with the path or track followed by the effective spot, for example, "turned" at the bends of the track, by modifying operation of the scanner rather than by turning the laser head 10 around the Z axis. These principles can be very useful in the context of additive manufacturing, for example, as they allow an effective spot with a carefully selected energy distribution to be correctly aligned in correspondence with bends or curves of a track, for example, when solidifying layers in correspondence with curved portions of an object being formed.

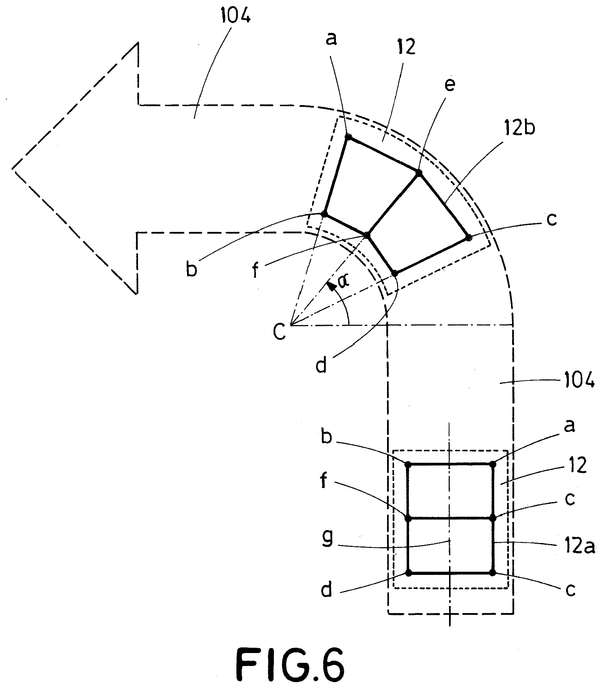

Figure 6 schematically illustrates an effective spot 12 travelling along a track 104, schematically illustrated as an arrow. In correspondence with a straight portion of the track, the effective spot has a substantially rectangular shape, and is established by a scanning pattern 12a shaped as a "digital 8", as known from for example WO-2015/135715-A1. When reaching the curved portion of the track, this scanning pattern is changed so that the effective spot 12 progressively acquires a non-rectangular shape (schematically illustrated as a six-sided polygon in figure 6). Figure 6 schematically illustrates how, when the center portion of the effective spot 12 has reached the center portion of the curve (α≈45°), the effective spot is determined by a scanning pattern 12b in which the segments as such correspond to those of the original scanning pattern 12a, but with their relative orientations and dimensions changed. The radially inner side of the scanning pattern 12b is now shorter than the radially outer side, thereby providing for a scanning pattern basically composed of two trapezoids, and a corresponding six-sided polygonal shape of the effective spot 12. As schematically illustrated in figure 6, in this embodiment the extensions of the segments in the direction aligned with the track are a function of the distance of the segments to the center C of the curve, in the radial direction.

The scanning patterns 12a and 12b are defined by characteristic points, in this case, control points that establish the start and the end of the segments making up the scanning pattern (schematically illustrated as control points a, b, c, d, e, f in figure 6), and the method can for example involve adapting the relative (and absolute) positions of these control points, as a function of the angle α and of the distance of the respective control point to the center C of the curve. The control points a-f can travel in a straight direction while the relevant part of the scanning pattern is travelling along the straight portion of the track 104, with a linear velocity corresponding to the velocity with which the effective spot 12 is to be displaced along the straight portion of the track. When reaching the curved portion of the track, the control points a-f will travel along a curve with a linear velocity (that is, the velocity in terms of mm/s) which will be determined by the angular velocity (dα/dt, the angular velocity with which the effective spot and the control points travel along the curve) and the distance between the respective control point and the center C of the curve. This means that whereas all control points and portions of the effective spot may travel at the same angular velocity, the radially outer control points a, c and e will travel at a higher linear velocity than the radially inner control points, which will give rise to the conversion of the originally rectangular shape or outline of the scanning pattern and of the effective spot, into a substantially six-sided polygonal shape or outline of the scanning pattern and of the effective spot (of course, in practice, the "real" outline of the effective spot will also depend on scanning speed and beam power throughout the scanning pattern; thus, there can be cases in which the shape of the scanning pattern may differ substantially from the shape of the effective spot).

Thus, an enhanced performance of the effective spot can be achieved, for example, to keep the width of a heated track and/or the temperature profile across the track substantially constant along the track, also in correspondence with a curve or bend in the track.

The specific scanning pattern shown in figure 6 is just an example, and the principles are obviously applicable to any other scanning pattern. In many embodiments, it is preferred that the scanning pattern be adapted so that if it is originally (that is, at the straight portion of the track) symmetric with respect to a centerline (schematically illustrated as "g" in figure 6) aligned with the track, at the curved portion it is no longer symmetric with regard to any such centerline.

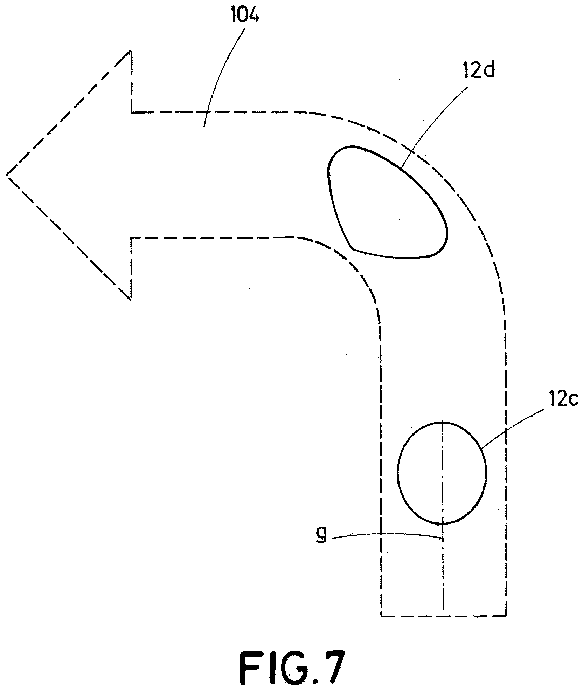

An additional example is schematically illustrated in figure 7, which shows how a substantially circular or elliptical scanning pattern 12c at the straight portion of the track 104 can be modified at the curve of the track, so that it ceases to be symmetric in relation to any centerline aligned with the track.

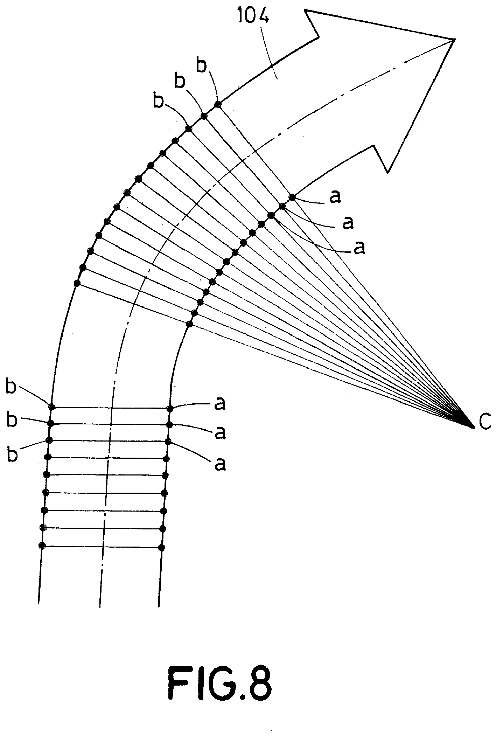

Figure 8 schematically illustrates how control points (for example, leading control points a and b of a scanning pattern as the one illustrated in figure 6) advance along a curved portion of the track. Trailing control points (such as for example control points e, f, c, d of a scanning pattern as the one illustrated in figure 6) advance accordingly. It can be readily understood from figure 8 how this implies that the curve will be heated substantially as if it were heated by a spot substantially shaped as the curve. Thus, and depending on the resolution of the scanning pattern in terms of the distance between the control points, a very good or quasi perfect alignment between the effective spot and the track can be achieved, also at the curve. The alignment is not only due to the orientation of the effective spot, but also due to its shape which has been adapted to the curvature of the curve.

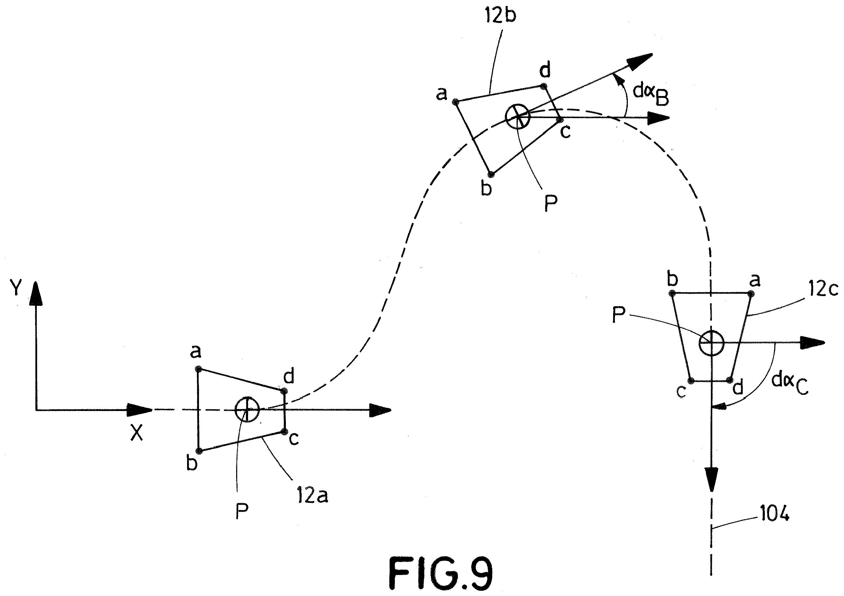

Figure 9 schematically illustrates another embodiment in which the scanning pattern is kept constant throughout straight and curved portions of a track 104. Here, a trapezoidal scanning pattern defined by four control points a, b, c and d pivots with regard to a reference point P of the scanning pattern while the scanning pattern follows the track 104. That is, the scanning pattern 12a at the end of a straight portion of the track has the same shape as the scanning patterns 12b and 12c at other positions along the track, but compared to scanning pattern 12a, scanning patterns 12b and 12c have pivoted around their reference point P. The orientation of the scanning patterns 12b (d_{αB}) and 12c (d_{α}c) in the X-Y plane onto which they are projected with regard to, for example, the X axis will correspond to the tangent to the track at the relevant position of the track, as schematically illustrated in figure 9..

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method of heating at least one selected portion of an object, comprising the steps of:
projecting, with a device (10) comprising a scanner (2), an energy beam (11) onto a surface of the object (100; 206) so as to produce a primary spot on the surface, and repetitively scanning the beam (11) in two dimensions in accordance with a scanning pattern so as to establish an effective spot (12) on the surface, the effective spot having a two-dimensional energy distribution,
displacing the effective spot (12) in relation to the surface of the object (100; 206) to progressively heat the at least one selected portion of the object, wherein displacing the effective spot (12) in relation to the surface of the object (100; 206) comprises displacing the effective spot following a track (104) featuring at least one change of direction;
**characterized in that**
the method comprises maintaining the effective spot (12) aligned with the track (104) by modifying operation of the scanner (2) in correspondence with the at least one change of direction.

2. The method according to claim 1, wherein the step of maintaining the effective spot (12) aligned with the track (104) is carried out without pivoting the device (10) around any axis for the purpose of aligning the effective spot (12) with the track (104).

3. The method according to claim 1, wherein the step of modifying operation of the scanner (2) is carried out so as to turn the effective spot (12) around an axis substantially aligned with the energy beam (11), without turning the device (10) and without turning the object (100, 206) around any axis substantially aligned with the energy beam (11).

4. The method according to any of claims 1-3, wherein the track extends in a plane (X-Y), and wherein the step of modifying operation of the scanner (2) is carried out so as to turn the effective spot around an axis (Z) substantially perpendicular to the plane, without turning the device (10) and without turning the object (100, 206) around any axis substantially perpendicular to the plane.

5. The method according to any of the preceding claims, comprising the step of maintaining the geometric shape of the effective spot and/or of the scanning pattern (12a, 12b, 12c) constant in correspondence with said at least one change of direction.

6. The method according to any of the preceding claims, comprising the step of modifying a geometric shape of the effective spot (12) and/or of the scanning pattern (12a, 12b; 12c, 12d) in correspondence with said at least one change of direction.

7. A method of heating at least one selected portion of an object, comprising the steps of:
projecting, with a device (10) comprising a scanner (2), an energy beam (11) onto a surface of the object (100; 206) so as to produce a primary spot on the surface, and repetitively scanning the beam (11) in two dimensions in accordance with a scanning pattern so as to establish an effective spot (12) on the surface, the effective spot having a two-dimensional energy distribution,
displacing the effective spot (12) in relation to the surface of the object (100; 206) to progressively heat the at least one selected portion of the object, wherein displacing the effective spot (12) in relation to the surface of the object (100; 206) comprises displacing the effective spot following a track (104) featuring at least one change of direction;
**characterized in that**
the method comprises modifying a geometric shape of the effective spot (12) and/or of the scanning pattern (12a, 12b; 12c, 12d) in correspondence with said at least one change of direction.

8. The method according to any of claims 6 and 7,wherein modifying the geometric shape of the effective spot and/or of the scanning pattern comprises:
- modifying the scanning pattern (12a, 12b; 12c, 12d), wherein at least some portions of the scanning pattern are modified as a function of their distance to a center of the change of direction;
and/or
- modifying the scanning pattern so that all parts of the scanning pattern (12a, 12b; 12c, 12d) are displaced at substantially the same angular velocity along a curved portion of the track (104) in correspondence with the at least one change of direction;
and/or
- displacing characteristic points (a, b, c, d, e, f) of the scanning pattern at the same linear velocity along a straight portion of the track, and displacing the characteristic points (a, b, c, d, e, f) of the scanning pattern at the same angular velocity throughout a curved portion of the track in correspondence with said change of direction, at least one of the characteristic points being displaced at a different linear velocity than at least another one of the characteristic points at said curved portion of the track.

9. The method according to any of claims 6-8, wherein the scanning pattern (12a; 12c) is substantially symmetric with respect to a centerline (g) parallel with the track when the scanning pattern is at a straight portion of the track (104), and wherein the scanning pattern (12b; 12d) is not symmetric with respect to any centerline in correspondence with the change of direction.

10. The method according to any of the preceding claims, for additive manufacturing, for joining at least two workpieces (101, 102) by welding them together, for laser cladding or for laser hardening.

11. The method according to any of the preceding claims, wherein the effective spot (12) is displaced along the track (104) by relative movement of the device (10) in relation to the object (100, 206), and/or wherein the scanner (2) is additionally operated to displace the effective spot (12) along the track (104).

12. The method according to any of the preceding claims, wherein the two-dimensional energy distribution of the effective spot (12) is dynamically adapted during displacement of the effective spot (12) in relation to the at least one change of direction of the track (104) so that it is different in a radially outer portion of the effective spot (12) than in a radially inner portion of the effective spot (12).

13. The method according to any of the preceding claims, wherein the energy beam (11) is a laser beam and wherein the device is a laser head (10) for projecting the laser beam (11) onto the object (100, 206).

14. A system for heating at least one selected portion of an object (100), the system comprising
means (100c) for supporting an object (100, 206), and
a device (10) for projecting an energy beam (11) onto a surface of the object (100, 206);
wherein the device (10) comprises a scanner (2) for scanning the energy beam (11) in at least two dimensions; and
wherein the system is programmed for carrying out the method of any of the preceding claims.

15. The system according to claim 14, comprising means (10a, 10b) for relative movement between the object (100, 206) and the device (10) by displacing the device (10) according to at least two orthogonal axes (X, Y), wherein the system does not allow for pivotation of the device (10) with regard to any axis substantially parallel to the energy beam (11).

16. The system according to claim 15, wherein the device (10) is not capable of pivotation with regard to any axis.
